# FASCICULE DE BREVET EUROPEEN

(11) **EP 2 215 127 B1**
(45) Date de publication et mention de la délivrance du brevet: **09.01.2013**
(21) Numéro de dépôt: 08856142.8
(22) Date de dépôt: 27.11.2008
(51) Int. Cl.: C08F 2/46, C08F 4/28, C08F 2/54

(54) **PROCEDE DE POLYMERISATION RADICALAIRE ET COMPOSITION POLYMERISABLE SOUS RAYONNEMENT POUR LA MISE EN OEUVRE DUDIT PROCEDE**
VERFAHREN ZUR RADIKALISCHEN POLYMERISATION UND DANACH ERHALTENE STRAHLUNGSPOLYMERISIERBARE ZUSAMMENSETZUNG
METHOD FOR FREE-RADICAL POLYMERISATION AND RADIATION POLYMERIZABLE COMPOSITION OBTAINED BY SAID METHOD

(30) Priorité: 28.11.2007 FR 0759377
(43) Date de publication de la demande: 11.08.2010
(73) Titulaire: A ET A - Mäder, 59000 Lille (FR); Centre National de la Recherche Scientifique (CNRS), 75794 Paris Cedex (FR); Universite De Haute Alsace, 68093 Mulhouse Cedex (FR)
(72) Inventeur: LE GUERN, Jean, F-21000 Dijon (FR); FARGE, Hervé, F-78990 Elancourt (FR); ALLONAS, Xavier, F-68100 Mulhouse (FR); LALEVEE, Jacques, F-68200 Mulhouse (FR); FOUASSIER, Jean Pierre, F-68790 Morschwiller-le Bas (FR)
(74) Mandataire: Balesta, Pierre
(86) Numéro de dépôt international: PCT/FR2008/052135
(87) Numéro de publication internationale: WO 2009/071844

(56) Documents cités:
- EP-A- 1 409 558
- WO-A-2004/104051

## Description

La présente invention a pour objet un procédé de polymérisation radicalaire d'une composition comportant un monomère et un aldéhyde apte à être oxydé sous l'action d'un rayonnement et en présence d'oxygène, pour former un hydroperoxyde qui va se décomposer sous l'action du même rayonnement et initier une réaction de polymérisation radicalaire. L'invention concerne également une composition pour la mise en oeuvre dudit procédé ainsi que les produits obtenus par ledit procédé.

La réaction de photopolymérisation radicalaire présente un inconvénient majeur lié à la présence de l'oxygène de l'air dans le milieu réactionnel qui peut ralentir ou inhiber totalement le processus de polymérisation. D'une manière générale, le dioxygène de l'air désactive les états excités et réagit à la fois avec les radicaux amorceurs et les macroradicaux de propagation (acrylique, styrénique ...) pour former des radicaux peroxyles. Ces dernières espèces sont inactives vis-à-vis de la double liaison du monomère. Elles ne peuvent pas amorcer et participer de manière efficace à la réaction de polymérisation.

Puisque la majorité des applications industrielles ont lieu à l'air libre, on conçoit aisément l'intérêt de trouver des solutions permettant de remédier aux inconvénients liés à la présence de l'oxygène de l'air lors de la réticulation.

Différentes solutions se sont avérées possibles :
- l'utilisation de conditions de photopolymérisation en laminé (l'échantillon est recouvert d'un film polymère imperméable à l'oxygène de l'air ce qui évite la contamination par l'oxygène ambiant) ;
- la réticulation sous une atmosphère contrôlée, le plus souvent fermée par un mélange gazeux inerte (azote, argon, dioxyde de carbone) ;
- l'introduction d'amines dans le milieu réactionnel (celles-ci sont suspectées de réagir avec les radicaux peroxyles pour former des hydroperoxydes et des radicaux amorceurs aminoalkyles) ;
- la conversion du dioxygène en son état singulet ¹O₂ qui pourra ensuite être capturé par un composé adéquat. dérivé d'isobenzofurane, par exemple ;
- l'augmentation de la réactivité intrinsèque du système photoamorceur soit par augmentation de l'intensité des lampes UV, soit par une utilisation de quantités plus élevées en photoamorceurs.

Ces diverses approches ne sont toutefois pas toujours industriellement réalisables limitant ainsi le domaine d'application des photopolymères.

Il est connu du document EP 1.409.558 de polymériser des molécules comportant une double liaison carbone-carbone avec un système amorceur comportant : un accélérateur, un peroxyde donneur d'oxygène et un aldéhyde de formule générale R-HC=O, R étant un radical qui comprend au moins un atome de carbone. Le procédé décrit dans ce document comporte quatre étapes :
- l'accélérateur réagit avec l'agent de génération d'oxygène pour produire un agent donneur d'oxygène ;
- l'aldéhyde est oxydé grâce à cet agent donneur d'oxygène généré et, éventuellement, grâce à l'oxygène dissout ou présent en surface, pour former un hydroperoxyde ;
- l'hydroperoxyde réagit avec le reste de l'accélérateur pour produire une espèce radicalaire RCO₂^{•} qui va initier la réaction de polymérisation;
- la polymérisation radicalaire des monomères ou oligomères comportant une double liaison carbone-carbone.

Ce procédé permet de faire polymériser en fine épaisseur et de façon bien contrôlée des monomères vinyliques et notamment des acryliques ou méthacryliques, habituellement fortement inhibés par l'oxygène de l'air qui a tendance à diffuser dans le produit à l'état liquide.

L'exploitation industrielle de ce procédé a mis en évidence une limitation due à un défaut de polymérisation sur une faible couche en surface. En effet, il reste toujours, à l'air libre, une fine pellicule de monomère non polymérisé qui bloque l'emploi dans les revêtements type vernis, peinture ou revêtement divers. Il a été identifié que dans cette fine couche, l'oxydation est trop rapide et trop importante. En effet, l'hydroperoxyde formé par oxydation de l'aldéhyde subit un deuxième étage d'oxydation, conduisant à un acide et, par conséquent, n'est plus capable d'agir sur les doubles liaisons carbone-carbone.

Pour remédier au problème, il a été envisagé de bloquer l'oxydation en surface en incorporant dans la composition, en plus des trois produits précités, un photoamorceur qui, sous l'exposition à des UV, fait polymériser une fiche couche de surface créant ainsi un écran à l'oxygène de l'air. Ce procédé est bien connu qui consiste à utiliser une polymérisation UV pour faire écran et entamer le durcissement à l'abri de l'air. Il est explicité par exemple dans le document US 4.605.465.

Par ailleurs, il est connu du document WO 2004/104051 des systèmes photoamorceurs qui utilisent un coamorceur à base d'amine en combinaison avec un aldéhyde pour diminuer l'inhibition due à l'oxygène. En effet, la réactivité de l'aldéhyde sur l'amine est plus importante que sur l'oxygène de l'air.

Le but de la présente invention est de proposer un nouveau système polymérisable qui ne soit pas inhibé en présence d'oxygène. D'une manière surprenante, les demanderesses ont mis en évidence qu'une réaction de polymérisation radicalaire de toute molécule comportant au moins une double liaison carbone-carbone peut avoir lieu en présence de l'oxygène de l'air, en utilisant comme seul système amorceur un aldéhyde, lorsque celui-ci est soumis à l'action d'un rayonnement, tel que bombardement électronique ou rayons UV. Dans ces conditions il a été constaté que l'oxygène améliorait la polymérisation permettant d'atteindre des surfaces « tack free » soit sèches au toucher.

La présente invention concerne, selon un premier aspect, un procédé de polymérisation radicalaire d'une composition qui est polymérisable sous un rayonnement donné (tels que les rayons UV, visibles ou par bombardement électronique) et qui comprend un monomère comportant au moins une double liaison carbone-carbone et, comme seul système amorceur, un aldéhyde apte à former un hydroperoxyde en présence de l'oxygène de l'air et sous l'action dudit rayonnement comprenant les étapes suivantes:
i) une étape d'oxydation de l'aldéhyde sous l'action dudit rayonnement et en présence d'oxygène, pour former un hydroperoxyde,
ii) une étape de décomposition dudit hydroperoxyde sous l'action dudit rayonnement pour former au moins un radical apte à amorcer la polymérisation dudit monomère comportant au moins une double liaison carbone-carbone ; et
iii) une étape de polymérisation dudit monomère.

On entend par amorceur un composé chimique qui permet de démarrer la réaction de polymérisation radicalaire. A ne pas confondre avec un co-amorceur, qui réagit avec l'amorceur, soit dans le but de débuter la réaction de polymérisation par réaction de l'amorceur avec le co-amorceur, soit dans le but de s'additionner à l'action de l'amorceur et augmenter la vitesse de la réaction de polymérisation.

Les termes dioxygène de l'air et oxygène de l'air désignent le même composé dans la présente demande.

Contrairement aux procédés de polymérisation radicalaire existants, où l'oxygène de l'air a un effet inhibiteur sur la polymérisation des molécules comportant au moins une double liaison carbone-carbone, l'oxygène présent dans l'air est nécessaire à la réaction d'oxydation de l'aldéhyde et favorise donc la réaction de polymérisation de ces molécules.

Dans une variante, ladite composition étant transparente aux rayons ultra-violets ou visibles, ou permissive aux électrons, la polymérisation du monomère intervient dans toute l'épaisseur de la composition sans apport d'énergie thermique.

Dans une variante, ladite composition étant insuffisamment transparente ou permissive aux électrons ou aux rayons ultra-violets ou insuffisamment irradiée, de l'énergie thermique est apportée à ladite composition, de préférence par passage dans-une enceinte chauffée à une température allant de 30°C à 60°C, permettant la polymérisation de ladite composition dans toute son épaisseur.

Dans une variante, un accélérateur, notamment un sel métallique tel que le sel de cobalt, est ajouté à ladite composition pour augmenter la vitesse de décomposition de l'hydroperoxyde formé suite à ladite étape d'oxydation, de préférence photochimique, de l'aldéhyde.

L'invention concerne, selon un deuxième aspect, une composition polymérisable sous un rayonnement donné, pour la mise en oeuvre du procédé décrit selon l'une des variantes ci-dessus, comprenant un monomère comportant au moins une double liaison carbone-carbone caractérisée en ce qu'elle comprend, comme seul système amorceur, un aldéhyde selon la revendication 1, apte à former un hydroperoxyde en présence de l'air et sous l'action dudit rayonnement.

Il a été trouvé que les aldéhydes seuls, une fois irradiés, peuvent amorcer une réticulation des doubles liaisons vinyliques favorisée au contact de l'air par la photo oxydation de l'aldéhyde en hydroperoxyde, lui-même décomposé par les rayonnements pour créer un radical.

Le phénomène peut s'expliquer de la façon suivante : sous irradiation lumineuse et sans ajout nécessaire d'accélérateurs ou de catalyseurs ; l'aldéhyde s'oxyde au contact de l'oxygène de l'air et se transforme en hydroperoxyde. Ce dernier, soumis au rayonnement (UV ou bombardement électronique) se décompose et crée un radical qui s'additionne sur la double liaison vinylique entraînant une polymérisation.

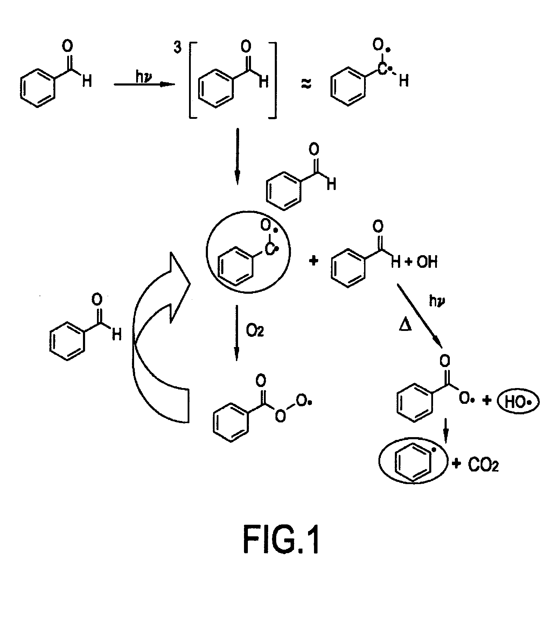

Le mécanisme figurant dans le schéma de la figure 1 annexée est proposé, pour expliquer le rôle joué par un aldéhyde en général (ici, le benzaldéhyde) pour amorcer une réaction de polymérisation radicalaire sous l'action de rayonnements.

Les radicaux amorceurs de polymérisation ont été encerclés.

Dans une variante, le rayonnement est un rayonnement ayant une longueur d'onde comprise dans le domaine des ultra-violets ou du visible.

Dans une variante, le rayonnement est un bombardement électronique.

L'aldéhyde est choisi dans le groupe : benzaldéhyde, 1-dodécanal, 3,7-diméthyl-2,6-octadiénal, 2,6-diméthyl-5-heptenal, l'anthraldéhyde.

Chaque aldéhyde présente un spectre d'absorption lumineuse propre. Ainsi, le benzaldéhyde- absorbant les rayonnements dans le domaine des ultra-violets, est excité par photopolymérisation via une lampe émettant des rayons ultra-violets, à la différence par exemple de l'antraldéhyde qui absorbe les rayonnements dans le domaine du visible et est donc excité par photopolymérisation via une lampe émettant des rayons visibles. Dans ce dernier cas, avantageusement, la lumière solaire est envisageable, ce qui supprime l'emploi d'une source de rayonnement.

Dans une variante, la proportion en poids d'aldéhyde dans la composition est de 0,01% à 20%.

L'invention concerne, selon un autre aspect, l'utilisation de la composition polymérisable selon l'une des variantes prises isolément ou en combinaison décrites ci-dessus, pour la photopolymérisation radicalaire en surface sous l'oxygène de l'air.

Avantageusement, il n'est pas nécessaire d'ajouter un agent donneur d'oxygène à la composition polymérisable. L'utilisation de l'oxygène de l'air, présent en surface et dissous dans ladite composition, sans aucun film imperméable à l'air formé ou ajouté, est suffisante pour obtenir la polymérisation totale de la composition sans effet tackant en surface du film polymérisé.

L'invention concerne, selon un autre aspect, l'utilisation de la composition polymérisable selon l'une des variantes prises isolément ou en combinaison décrites ci-dessus, pour la photopolymérisation radicalaire en stratifié.

Par stratifié, on comprend que plusieurs couches formées de la composition selon l'invention sont superposées, lesdites couches étant éventuellement chargées, notamment par des fibres de renfort, puis soumises à un rayonnement donné pour polymériser dans toutes l'épaisseur desdites couches superposées. Aucun film imperméable à l'oxygène de l'air n'est intercalé entre lesdites couches, ainsi l'oxygène de l'air présent en surface du stratifié formé ou dissous dans l'épaisseur de ce dernier réagit avec l'aldéhyde sous l'effet du rayonnement.

Selon un autre aspect, l'invention a trait à l'utilisation d'un aldéhyde comme seul système amorceur, apte à former un hydroperoxyde en présence de l'oxygène de l'air et sous l'action d'un rayonnement donné, pour polymériser en présence de l'air et sous ledit rayonnement une composition à base d'au moins un monomère comportant au moins une double liaison carbone-carbone.

D'autres caractéristiques et avantages de l'invention apparaîtront à la lecture de la description détaillée et des exemples de réalisation qui vont suivre, ainsi que des figures annexées dans lesquelles :
- la figure 2 représente les cinétiques de photopolymérisation du HDDA (1,6-hexanediol-diacryle) grâce à trois systèmes amorceurs différents : a) DMPA (1%) ; b) benzaldéhyde (3%) ; c) benzaldéhyde/triéthylamine (3%/2%), les pourcentages indiqués étant en poids;
- la figure 3 représente les cinétiques de photopolymérisation de l'Ebecryl 605 (irradiation polychromatique) en laminé. Légende : a-EDB, b-1-dodécanal, c-Benzaldéhyde, d- 3,7-diméthyl-2,6-octadiénal, e- 3-(4-isopropylphényl)-2-méthylpropanal ;
- la figure 4 représente les cinétiques de polymérisation de l'Ebecryl 605 (irradiation polychromatique) sous air. Légende : a-EDB, b-1-dodécanal, c-Benzaldéhyde, d-3-(4-isopropylphényl)-2-méthylpropanal ;
- la figure 5 représente le taux de conversion en fonction du temps, de différentes compositions selon l'invention. De l'Ebecryl 605, contenant 3% en masse de benzaldéhyde, est mélangé avec les produits suivants. Légende : a- Co(II) 2-éthylhexanoate (0,3%), b- peroxyde de ditertiobutyle (1%), c- Co(II) 2-éthylhexanoate (0,3%) et peroxyde de ditertiobutyle (1%).

La présente invention concerne, selon un premier aspect, une composition polymérisable sous un rayonnement donné (tel que rayons UV ou bombardement électronique), ladite composition comprenant un monomère comportant au moins une double liaison carbone-carbone et, comme seul système amorceur, un aldéhyde apte à former un hydroperoxyde en présence de l'oxygène de l'air et sous l'action dudit rayonnement.

Les aldéhydes visés par la présente invention répondent à la formule générale : R - HC=O, dans laquelle R est un composé comprenant au moins un atome de carbone. Plus le radical R est donneur d'électrons, plus la formation d'un groupe hydroperoxyde in situ est favorisée.

Dans cette composition, l'aldéhyde est présent à une concentration de 0,01% à 20% en poids.

Dans le cas général des aldéhydes, un mécanisme d'auto-oxydation thermique peut être à l'origine de la formation de radicaux dans le milieu [1-2] *(les références numériques entre parenthèses carrées se rapportent aux références bibliographiques figurant à la fin de la description).* Le phénomène d'auto-oxydation peut être parfois accentué par un rayonnement (irradiation lumineuse ou bombardement électronique). Dans ces conditions, les aldéhydes peuvent jouer à la fois le rôle de photoamorceur et de co-amorceur. La formation de radicaux acyles, extrêmement efficaces pour amorcer la polymérisation, sera alors obtenue par l'intermédiaire d'un hydroperoxyde. Les radicaux ainsi libérés sont réactifs et peuvent amorcer la polymérisation en s'additionnant sur la double liaison de la fonction acrylate.

L'invention concerne, selon un deuxième aspect, un procédé de polymérisation radicalaire, d'une composition qui est polymérisable sous un rayonnement donné et qui comprend un monomère comportant au moins une double liaison carbone-carbone et, comme seul système catalytique, un aldéhyde apte à former un hydroperoxyde en présence de l'air et sous l'action dudit rayonnement, caractérisé en ce que ledit procédé comprend :
i) une étape d'oxydation de l'aldéhyde sous l'action dudit rayonnement et en présence d'oxygène, pour former un hydroperoxyde,
ii) une étape de décomposition dudit hydroperoxyde sous l'action dudit rayonnement pour former au moins un radical apte à amorcer la polymérisation dudit monomère comportant au moins une double liaison carbone-carbone ; et
iii) une étape de polymérisation dudit monomère.

Si la composition est transparente aux UV ou si elle permet le passage d'électrons, la polymérisation va se poursuivre dans toute l'épaisseur de la composition. Les aldéhydes possèdent des hydrogènes labiles. En effet, des constantes de vitesse d'arrachement d'hydrogène très élevées, entre un radical tel que le tert-butoxyl (tBuO^{•}) et différents aldéhydes, ont été obtenues (k= 10⁷-10⁸ M⁻¹s⁻¹). Les aldéhydes peuvent donc jouer en même temps le rôle d'un photoamorceur et d'un coamorceur, à condition qu'ils absorbent de la lumière. Les radicaux ainsi libérés sont réactifs et peuvent amorcer la polymérisation en s'additionnant sur la double liaison de la fonction acrylate.

Par ailleurs, les radicaux créés en surface par la photo oxydation vont se -propager dans l'épaisseur pour participer à la polymérisation sur toute l'épaisseur du matériau (voir les exemples 5-7 ci-après).

Il est possible, dans le cadre de l'invention, d'ajouter un photoamorceur classique de type I (exemples : 2,2-dimethoxyphenyl acétophénone, 2-Hydroxy-2-methyl-1-phenyl-1-propanone - Irgacure 1173) ou un système photoamorceur de type II (exemples : Isopropylthioxanthone (ITX)/Ethyldimethylaminobenzoate (EDB)) qui pourra accélérer la polymérisation en masse (voir l'exemple 8 ci-après).

L'invention sera mieux comprise à la lecture des exemples de réalisation présentés ci-après. Les cinétiques de conversion des doubles liaisons acryliques ont été suivies grâce à la spectroscopie infrarouge à transformée de Fourier. Un suivi en temps réel du processus de polymérisation est alors possible [3]. Le dispositif d'irradiation est une lampe Xenon-Mercure typique des spectres d'émission des lampes industrielles.

### Exemple 1. Cas du 1,6-hexanediol-diacryle (HDDA)

Une première série de réactions de photopolymérisation a été réalisée en utilisant l'aldéhyde seul pour amorcer le processus en surface sous l'oxygène de l'air.

Les résultats obtenus ont été comparés à ceux obtenus en utilisant un photoamorceur de référence qui est la *2,2-dimethoxyphényl-acétophénone (DMPA)* [3]. Un système aldéhyde/amine a aussi été étudié pour comparaison à l'aldéhyde seul.

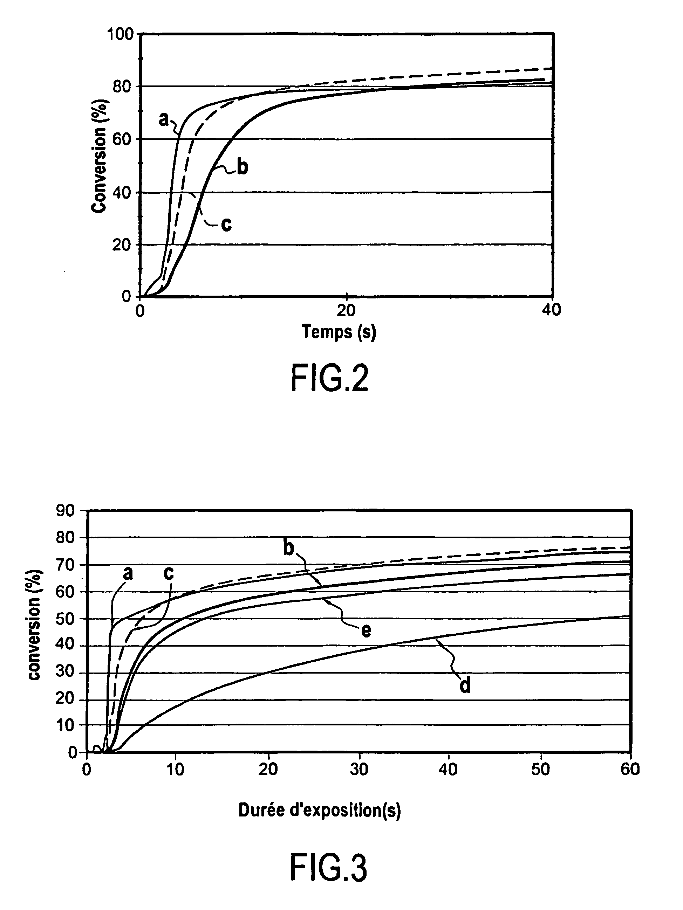

Les cinétiques de photopolymérisation du HDDA obtenues grâce à trois systèmes amorceurs différents : a) DMPA (1%) ; b) benzaldéhyde (3%) ; c) benzaldéhyde/triéthylamine (3%/2%), (les pourcentages indiqués étant en poids) sont données dans la Figure 2.

Les vitesses de polymérisation maximales (Rp) sont regroupées Tableau I.

**Tableau I**

| Amorceurs | Rp/[M₀]*100 |
|---|---|
| DMPA | 33 |
| Benzaldéhyde | 11,1 |
| Benzaldéhyde/Triéthylamine | 20,7 |

On peut remarquer, selon les résultats présentés dans la Figure 2, la grande efficacité du benzaldéhyde seul qui permet d'atteindre un taux de conversion de 70% environ, en moins de 10 secondes d'irradiation. Cette efficacité est accentuée par la présence d'une amine comme la triéthylamine (la vitesse de polymérisation est alors doublée). Dans les deux cas, la vitesse est inférieure à la référence (DMPA). Cependant, à la vue de l'extrême réactivité de ce dernier composé en mode photochimique [3] les systèmes basés sur le benzaldéhyde apparaissent comme très efficaces et prometteurs. Le taux de conversion final est supérieur dans le cas du système benzaldéhyde/amine à celui de la DMPA (82 % an lieu de 77%), ce qui constitue un élément très intéressant pour des applications en extérieur. On remarque que le benzaldéhyde est suffisant comme seul système amorceur et procure des surfaces sèches au toucher contrairement aux résultats obtenus avec le couple benzaldéhyde/amine. En effet, l'aldéhyde réagit en priorité avec l'amine et n'assure pas ainsi son rôle d'éponge de l'oxygène de l'air présent en surface et dissous de la composition polymérisable.

### Exemple 2 Cas de l'ebercyl 605

Pour évaluer les potentialités des aldéhydes comme systèmes photoamorceurs, un autre système acrylique a été testé (Ebecryl 605- Cytec). Ce dernier est caractérisé par une viscosité supérieure au HDDA. Pour ces expériences, nous avons comparé les aldéhydes à un système ITX/EDB (Isopropylthioxanthone/Ethyldimethylaminobenzoate) très utilisé industriellement (système photoamorceur de type II).

Les résultats obtenus sont regroupés dans le Tableau II ci-dessous, qui présente les vitesses de polymérisations maximales (Rp) des systèmes amorceurs étudiés et propriétés du polymère formé sous air.

On peut remarquer que le système benzaldéhyde est très efficace i.e. équivalent à ITX/EDB sous l'oxygène de l'air. Par système laminé, on comprend dans la suite de la description qu'un film imperméable à l'oxygène de l'air est disposé à la surface extérieure de la composition avant exposition à un rayonnement. Un point capital est l'amélioration de la vitesse de polymérisation (Rp) entre le système en laminé et le système sous l'oxygène de l'air. Ce gain est important pour une application pratique à l'air (peinture, revêtement ...). Dans le cas du système benzaldéhyde, le polymère final a des propriétés intéressantes, par exemple il est sec au toucher, et présente un taux de conversion supérieur à ITX/EDB ainsi qu'une dureté de surface équivalente.

**Tableau II**

| Système | *Laminé* | | *Sous Air* | |
|---|---|---|---|---|
| | Rp/[M₀]*100 | Rp/[M₀]*100 | Conversion finale (%) | Dureté Persoz |
| ITX/EDB | 39 | 31,7 | 75 | 320 |
| Benzaldéhyde | 23,6 | 30 | 81 | 325 |

### Exemple 3. Efficacité des aldéhydes en tant que photoamorceur-coamorceur

Les aldéhydes sont suspectés de posséder des hydrogènes labiles. Ils peuvent jouer le rôle d'un photoamorceur et de co-amorceur en même temps à condition qu'ils soient soumis à un rayonnement (rayons UV ou bombardement électronique). Les radicaux ainsi libérés sont réactifs et peuvent amorcer la polymérisation en s'additionnant sur la double liaison de la fonction acrylate.

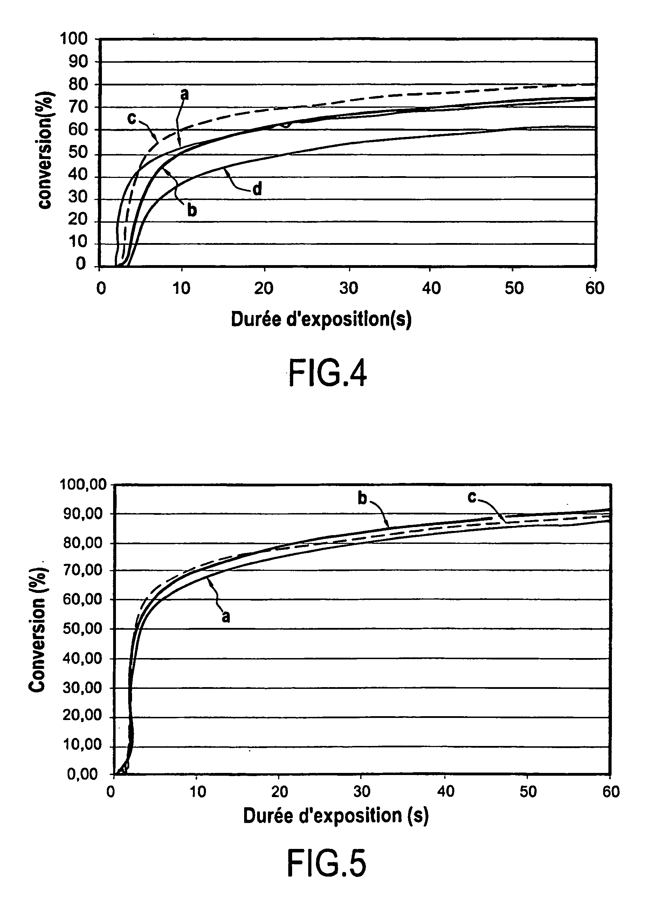

Les résultats de polymérisation obtenus par RT-FTIR sont regroupés dans le tableau 3 et les cinétiques de polymérisation sont données dans les figures 3 et 4. Le système de référence est le système ITX/EDB (isopropylthioxanthone /éthyldiméthylaminobenzoate) très utilisé industriellement (système photoamorceur de type II). Le tableau III ci-après indique les vitesses de polymérisation R_{ρ} et taux de conversion finaux pour l'Ebecryl 605 (polymérisation en laminé ou sous air amorcée par différents aldéhydes).

**Tableau III**

| | Laminé | | Sous air | |
|---|---|---|---|---|
| Système amorceur | Rₚ*100/[M0] | Conversion finale (%) | Rₚ* 100/[M0] | Conversion finale (%) |
| Référence : ITX/EDB | 39 | 79,6 | 31,7 | 73 |
| 1-dodécanal | 19,9 | 78 | 16 | 82 |
| 3,7-diméthyl-2,6-octadiénal | 3,7 | 65 | 3,2 | 62,6 |
| 2,6-diméthyl-5-heptenal | 5,8 | 49,7 | 6,7 | 72,6 |
| 3-(4-isopropylphényl)-2-méthylpropanal | 11,1 | 72,8 | 11,8 | 71,8 |
| décanal | 2,9 | 62,2 | 6,3 | 68,2 |
| trans-déc-4-énal | 1,5 | 55 | 3,3 | 66,7 |
| hexanal | 4,8 | 72,3 | 6,9 | 76,3 |
| nonanal | 2,6 | 60,9 | 7,3 | 75,7 |
| méthylthiobutanal | 2,4 | 56 | 4,3 | 63,3 |
| benzaldéhyde | 23,6 | 82,7 | 30 | 86,4 |
| 5-méthyl-2-furyl-butanal | 2,7 | 61,4 | 4,4 | 71 |

D'après les résultats regroupés dans le tableau III, on peut conclure que les aldéhydes sont globalement efficaces même si les vitesses sont inférieures à l'EDB. Seuls le 1-dodécanal et le benzaldéhyde sont très efficaces. On remarque que les vitesses de polymérisation des aldéhydes ainsi que les taux de conversion sont généralement, et logiquement conformément à l"invention, meilleurs sous l'oxygène de l'air qu'en laminé.

### Exemple 4. Système amorceur de matrice acrylique: Sensibilisation des aldéhydes

Les aldéhydes peuvent aussi jouer le rôle de donneur d'hydrogène (co-amorceur) dans un système bicomposant en présence d'ITX comme sensibilisateur grâce à la labilité de la liaison C-H.

L'ITX absorbe de la lumière et passe à l'état excité triplet, une désactivation de cet état excité a lieu en présence d'un aldéhyde à travers une réaction de transfert d'hydrogène. Ce mécanisme permet la formation des radicaux amorceurs qui déclencheront la réaction de photopolymérisation.

Cette réaction se superpose à la réaction accepteur/donneur des aldéhydes du point précédent

Les résultats obtenus sont représentés dans le tableau IV ci-dessous, qui indique les vitesses de polymérisation Rp et taux de conversion en laminé et sous air en présence de systèmes ITX/Co-amorceur ainsi que les valeurs de dureté Persoz « sous air ».

**Tableau IV**

| ITX/Co-amorceur | Laminé | | Sous air | | Dureté persoz |
|---|---|---|---|---|---|
| | Rₚ*10 0/[M0] | Conversion finale (%) | Rₚ*100/ [M0] | Conversion finale (%) | |
| EDB | 39 | 79,6 | 31,7 | 73 | 360 |
| 1-dodécanal | 26,8 | 83,7 | 21,2 | 87 | 339 |
| 3,7-diméthyl-2,6-octadiénal | 12,8 | 82,5 | 22,2 | 85 | 340 |
| 2,6-diméthyl-5-heptenal | 29,5 | 81 | 34 | 85,6 | 352 |
| 3-(4-isopropylphényl)-2-méthylpropanal | 25 | 83 | 28 | 84 | 355 |
| décanal | 22,8 | 82 | 8,4 | 71 | 356 |
| trans-déc-4-énal | 13,4 | 82 | 21,3 | 84,5 | 351 |
| hexanal | 25 | 84,5 | 19,8 | 83 | 343 |
| nonanal | 19 | 79 | 18,9 | 85 | 347 |
| méthylthiobutanal | 21,4 | 80,7 | 14,5 | 72,6 | 367 |
| benzaldéhyde | 44 | 81,6 | 40,5 | 87 | 370 |
| 5-méthyl-2-furyl-butanal | 31,4 | 80 | 29 | 76 | 357 |

Ces résultats démontrent que les aldéhydes sont globalement efficaces et permettent d'obtenir des taux de conversion importants, le benzaldéhyde se distingue en donnant une vitesse de polymérisation (Rₚ) et un taux de conversion supérieurs à celles du composé de référence (EDB).

Comme précédemment par comparaison entre polymérisation en laminé et sous l'oxygène de l'air, on remarque que le 3,7-diméthyl-2,6-octadiénal, 2,6-diméthyl-5-heptenal, 3-(4-isopropylphényl)-2-méthylpropanal et trans-déc-4-énal possèdent des vitesses de polymérisation sous l'oxygène de l'air plus importantes qu'en laminé.

Les valeurs de dureté Persoz sont assez élevées ; avec le benzaldéhyde on a obtenu une valeur de 370. A propos des angles de contact (non reportés), les aldéhydes conduisent à des valeurs proches de l'EDB. On n'a pas de distinction notable en terme d'hydrophobicité avec la référence.

### Exemple 5. Ajout d'un sel de cobalt à l'aldéhyde

Un sel de cobalt (Co(II) 2-éthylhexanoate (Aldrich)) a été ajouté à 0,3% en poids dans un monomère acrylique (Ebecryl 605) contenant 3% en poids de benzaldéhyde. Une photopolymérisation très rapide est obtenue avec une conversion de 90% en moins d'une minute (sous l'oxygène de l'air), représentée dans la figure 5 par la courbe a. Le polymère final est particulièrement sec au touché.

### Exemple 6. Ajout d'un peroxyde à l'aldéhyde

Un peroxyde (peroxyde de ditertiobutyle) a été ajouté à 1% en poids dans un monomère acrylique (Ebecryl 605) contenant 3% en poids de benzaldéhyde. Une photopolymérisation très rapide est obtenue avec une conversion de 90% en moins d'une minute (sous air), représentée dans la figure 5 par la courbe b. Le polymère final est particulièrement sec au touché.

### Exemple 7. Ajout d'un sel de cobalt et d'un peroxyde à l'aldéhyde

Un sel de cobalt (Co(II) 2-éthylhexanoate (Aldrich)), ainsi qu'un peroxyde (peroxyde de ditertiobutyle) ont été ajouté respectivement à 0,3% et 1% en poids dans un monomère acrylique (Ebecryl 605) contenant 3% en poids de benzaldéhyde. Une photopolymérisation très rapide est obtenue avec une conversion de 90% en moins d'une minute (sous air), représentée dans la figure 5 par la courbe c. Le polymère final est particulièrement sec au touché.

### Exemple 8. Ajout d'un photoamorceur classique à ladit composition

Un photoamorceur classique Irgacure 1173 (Ciba) a été ajouté à 1% en poids dans une composition de type Bcure décrite dans le document EP 1.409.558 (le monomère acrylique est l'Ebecryl 605). Une photopolymérisation extrêmement rapide est obtenue avec une conversion de 80 % en moins d'une seconde (sous air). Le polymère final est particulièrement sec au touché grâce à la participation du benzaldéhyde pour le photoamorçage en surface.

### BIBLIOGRAPHIE

[1] A. Andy Parsons, "An Introduction to Free Radical Chemistry", Blackwell Publishing, 2000.
[2] J. Perkins, "Radical Chemistry: The Fundamentals", Oxford Chemistry Primers, 2001.
[3] a) J.P. Fouassier, "Photoinitiation, Photopolymerization and Photocuring: Fundamental and Applications", Hanser Publishers, New-York, 1995; b) *"*Photochemistry and UV curing: New trends", J.P. Fouassier Ed., Research Signpost, Trivandrum, 2006.

## Revendications

1. Procédé de polymérisation radicalaire d'une composition qui est polymérisable sous un rayonnement donné et qui comprend un monomère comportant au moins une double liaison carbone-carbone et, comme seul système amorceur, un aldéhyde apte à former un hydroperoxyde en présence de l'oxygène de l'air et sous l'action dudit rayonnement comprenant les étapes suivantes:
i) une étape d'oxydation de l'aldéhyde sous l'action dudit rayonnement et en présence d'oxygène, pour former un hydroperoxyde,
ii) une étape de décomposition dudit hydroperoxyde sous l'action dudit rayonnement pour former au moins un radical apte à amorcer la polymérisation dudit monomère comportant au moins une double liaison carbone-carbone ; et
iii) une étape de polymérisation dudit monomère.

2. Procédé selon la revendication 1, **caractérisé en ce que** ladite composition étant transparente aux rayons ultra-violets ou visibles, ou permissive aux électrons, la polymérisation du monomère intervient dans toute l'épaisseur de la composition sans apport d'énergie thermique.

3. Procédé selon la revendication 1, **caractérisé en ce que** ladite composition étant insuffisamment transparente ou permissive aux électrons ou aux rayons ultra-violets ou insuffisamment irradiée, de l'énergie thermique est apportée à ladite composition, de préférence par passage dans une enceinte chauffée à une température allant de 30°C à 60°C, permettant la polymérisation de ladite composition dans toute son épaisseur.

4. Procédé selon l'une des revendications 1 à 3, dans lequel un accélérateur, notamment un sel métallique tel que le sel de cobalt, est-ajouté à ladite composition pour augmenter la vitesse de décomposition de l'hydroperoxyde formé suite à ladite étape d'oxydation, de préférence photochimique, de l'aldéhyde.

5. Composition polymérisable sous un rayonnement donné, pour la mise en oeuvre du procédé décrit selon l'une des revendications 1 à 4, comprenant un monomère comportant au moins une double liaison carbone-carbone **caractérisée en ce qu'**elle comprend, comme seul système amorceur, un aldéhyde apte à former un hydroperoxyde en présence de l'oxygène de l'air et sous l'action dudit rayonnement, l'aldéhyde étant choisi dans le groupe :
benzaldéhyde, 1-dodécanal, 3,7-diméthyl-2,6-octadiénal, 2,6-diméthyl-5-heptenal, l'anthraldéhyde.

6. Composition selon la revendication 5 dans laquelle ledit rayonnement est un rayonnement ayant une longueur d'onde comprise dans le domaine des ultra-violets ou du visible.

7. Composition selon la revendication 6 dans laquelle ledit rayonnement est un bombardement électronique.

8. Composition selon l'une des revendications 5 à 7, **caractérisée en ce que** sa proportion en poids d'aldéhyde est de 0,01% à 20%.

9. Utilisation d'une composition polymérisable sous un rayonnement donné, pour la mise en oeuvre du procédé décrit selon l'une des revendications 1 à 4, ladite composition polymérisable comprenant un monomère comportant au moins une double liaison carbone-carbone et comme seul système amorceur, un aldéhyde apte à former un hydroperoxyde en présence de l'oxygène de l'air et sous l'action dudit rayonnement pour la photopolymérisation radicalaire en surface sous l'oxygène de l'air.

10. Utilisation d'une composition polymérisable sous un rayonnement donné, pour la mise en oeuvre du procédé décrit selon l'une des revendications 1 à 4, ladite composition polymérisable comprenant un monomère comportant au moins une doute liaison carbone-carbone et comme seul système amorceur,un aldéhyde apte à former un hydroperoxyde en présence de l'oxygène de l'air et sous l'action dudit rayonnement pour la photopolymérisation radicalaire en stratifié, aucun film imperméable à l'oxygène de l'air n'est intercalé entre les différentes couches de ladite composition superposées et formant ledit stratifié, ainsi l'oxygène de l'air présent en surface du stratifié formé ou dissous dans l'épaisseur dudit stratifié réagit avec l'aldéhyde sous l'effet dudit rayonnement.

11. Utilisation selon l'une ou l'autre des revendications 9 et 10 comprenant une composition polymérisable selon l'une quelconque des revendications 5 à 8.

12. Utilisation d'un aldéhyde comme seul système amorceur, apte à former un hydroperoxyde en présence de l'oxygène de l'air et sous l'action d'un rayonnement donné, pour polymériser en présence de l'air et sous ledit rayonnement une composition à base d'au moins un monomère comportant au moins une double liaison carbone-carbone.

## Claims

1. A method of free-radical polymerization of a composition that is polymerizable under a given radiation and contains a monomer having at least one carbon-carbon double bond and, as single initiator system, an aldehyde capable of forming a hydroperoxide in the presence of air oxygen and under the action of said radiation, which comprises the following steps:
i) an oxidation step of the aldehyde under the action of said radiation and in the presence of oxygen, to form a hydroperoxide,
ii) a decomposition step of said hydroperoxide under the action of said radiation to form at least one radical capable of initiating the polymerization of said monomer comprising at least one carbon-carbon double bond; and
iii) a polymerization step of said monomer.

2. The method according to claim 1, **characterized in that** said composition being transparent to UV or visible rays, or permissive to electrons, the polymerization of the monomer takes place throughout the whole depth of the composition without any thermal power supply.

3. The method according to claim 1, **characterized in that** said composition being insufficiently transparent or permissive to electrons or UV rays or insufficiently irradiated, some thermal power is provided to said composition, preferably through passage in a heated chamber at a temperature ranging from 30°C to 60°C, allowing for the polymerization of said composition throughout the whole depth.

4. The method according to anyone of claims 1 to 3, wherein an accelerator, in particular a metal salt such as a cobalt salt, is added to said composition to increase the speed of decomposition of the hydroperoxide formed following said oxidation step, preferably photochemically, of the aldehyde.

5. A composition polymerizable under a given radiation, to implement the method according to anyone of claims 1 à 4, comprising a monomer having at least one carbon-carbon double bond **characterized in that** it comprises, as a single initiator system, an aldehyde capable of forming a hydroperoxide in presence of air oxygen and under the action of said radiation, the aldehyde being chosen from the group: benzaldehyde, 1-dodecanal, 3,7-dimethyl-2,6-octadienal, 2,6-dimethyl-5-heptenal, anthraldehyde.

6. The composition according to claim 5 wherein said radiation is a radiation with a wavelength comprised in the ultra-violet or visible range.

7. The composition according to claim 6 wherein said radiation is an electronic bombardment.

8. The composition according to anyone of the claims 5 to 7, **characterized in that** the proportion of aldehyde is from 0.01% to 20 wt.%.

9. A use of a composition polymerizable under a given radiation, to implement the method according to anyone of the claims from 1 to 4, said polymerizable composition comprising a monomer having at least one carbon-carbon double bond and as single initiator system, an aldehyde capable of forming a hydroperoxide in the presence of air oxygen and under the action of said radiation for surface free-radical photopolymerization under air oxygen.

10. A use of a composition polymerizable under a given radiation, to implement the method according to anyone of the claims from 1 to 4, said polymerizable composition comprising a monomer having at least one carbon-carbon double bond and as single initiator system, an aldehyde capable of forming a hydroperoxide in the presence of air oxygen and under the action of said radiation for the free-radical photopolymerisation into laminate, no film impermeable to air oxygen being intercalated between the different superimposed layers of said composition and forming said laminate, thus air oxygen present on the formed laminated surface or dissolved in the depth of said laminate reacts with the aldehyde under the action of said radiation.

11. The use according to claim 9 or 10 comprising a polymerizable composition according to anyone of claims 5 to 8.

12. A use of an aldehyde as single initiator system, capable of forming a hydroperoxide in the presence of air oxygen and under the action of a given radiation, to polymerize, in the presence of air and under said radiation, a composition based on at least one monomer having at least one carbon-carbon double bond.

## Patentansprüche

1. Verfahren zur radikalischen Polymerisation einer Zusammensetzung, die unter einer gegebenen Strahlung polymerisierbar ist und die ein Monomer, das wenigstens eine Kohlenstoff-Kohlenstoff-Doppelbindung umfaßt, sowie als einziges Initiatorsystem ein Aldehyd umfaßt, das geeignet ist, in Gegenwart des Sauerstoffs der Luft und unter der Wirkung der Strahlung ein Hydroperoxid zu bilden, umfassend die folgenden Schritte:
i) einen Schritt zur Oxidation des Aldehyds unter der Wirkung der Strahlung und in Gegenwart von Sauerstoff, um ein Hydroperoxid zu bilden,
ii) einen Schritt zur Zersetzung des Hydroperoxids unter der Wirkung der Strahlung, um wenigstens ein Radikal zu bilden, das geeignet ist, die Polymerisation des wenigstens eine Kohlenstoff-Kohlenstoff-Doppelbindung umfassenden Monomers zu initiieren, und
iii) einen Schritt zur Polymerisation des Monomers.

2. Verfahren nach Anspruch 1, **dadurch gekennzeichnet, daß** wenn die Zusammensetzung für UV- oder sichtbare Strahlen durchlässig ist oder den Durchgang von Elektronen ermöglicht, die Polymerisation des Monomers in der gesamten Dicke der Zusammensetzung ohne Zufuhr von Wärmeenergie stattfindet.

3. Verfahren nach Anspruch 1, **dadurch gekennzeichnet, daß** wenn die Zusammensetzung für Elektronen oder UV-Strahlen nicht durchlässig oder durchgängig genug ist oder unzureichend bestrahlt wird, der Zusammensetzung Wärmeenergie zugeführt wird, vorzugsweise durch Durchlaufen eines Raums, der auf eine Temperatur von 30 °C bis 60 °C erhitzt wird, was die Polymerisation der Zusammensetzung in ihrer gesamten Dicke ermöglicht.

4. Verfahren nach einem der Ansprüche 1 bis 3, wobei ein Beschleuniger, insbesondere ein Metallsalz, wie Kobaltsalz, der Zusammensetzung zugegeben wird, um die Geschwindigkeit der Zersetzung des Hydroperoxids, das im Anschluß an den Schritt der vorzugsweise photochemischen Oxidation des Aldehyds gebildet wird, zu erhöhen.

5. Zusammensetzung, die unter einer gegebenen Strahlung polymerisierbar ist, für die Durchführung des nach einem der Ansprüche 1 bis 4 beschriebenen Verfahrens, umfassend ein Monomer, das wenigstens eine Kohlenstoff-Kohlenstoff-Doppelbindung umfaßt, **dadurch gekennzeichnet, daß** sie als einziges Initiatorsystem ein Aldehyd umfaßt, das geeignet ist, in Gegenwart des Sauerstoffs der Luft und unter der Wirkung der Strahlung ein Hydroperoxid zu bilden, wobei das Aldehyd aus der Gruppe von Benzaldehyd, 1-Dodecanal, 3,7-Dimethyl-2,6-octadienal, 2,6-Dimethyl-5-heptenal, Anthraldehyd ausgewählt ist.

6. Zusammensetzung nach Anspruch 5, wobei die Strahlung eine Strahlung mit einer Wellenlänge im Bereich des UV-Lichts oder des sichtbaren Lichts ist.

7. Zusammensetzung nach Anspruch 6, wobei die Strahlung ein Elektronenbeschuß ist.

8. Zusammensetzung nach einem der Ansprüche 5 bis 7, **dadurch gekennzeichnet, daß** ihr Gewichtsanteil an Aldehyd 0,01 % bis 20 % beträgt.

9. Verwendung einer unter einer gegebenen Strahlung polymerisierbaren Zusammensetzung für die Durchführung des nach einem der Ansprüche 1 bis 4 beschriebenen Verfahrens, wobei die polymerisierbare Zusammensetzung ein Monomer, das wenigstens eine Kohlenstoff-Kohlenstoff-Doppelbindung umfaßt, sowie als einziges Initiatorsystem ein Aldehyd, das geeignet ist, in Gegenwart des Sauerstoffs der Luft und unter der Wirkung der Strahlung ein Hydroperoxid zu bilden, für die radikalische Photopolymerisation an der Oberfläche unter dem Sauerstoff der Luft umfaßt.

10. Verwendung einer unter einer gegebenen Strahlung polymerisierbaren Zusammensetzung für die Durchführung des nach einem der Ansprüche 1 bis 4 beschriebenen Verfahrens, wobei die polymerisierbare Zusammensetzung ein Monomer, das wenigstens eine Kohlenstoff-Kohlenstoff-Doppelbindung umfaßt, sowie als einziges Initiatorsystem ein Aldehyd, das geeignet ist, in Gegenwart des Sauerstoffs der Luft und unter der Wirkung der Strahlung ein Hydroperoxid zu bilden, für die radikalische Photopolymerisation im Laminat umfaßt, kein für den Sauerstoff der Luft undurchlässiger Film ist zwischen den verschiedenen übereinander angeordneten und das Laminat bildenden Schichten der Zusammensetzung eingefügt, somit reagiert der an der Oberfläche des gebildeten Laminats vorhandene oder in der Dicke des Laminats gelöste Sauerstoff der Luft unter der Wirkung der Strahlung mit dem Aldehyd.

11. Verwendung nach dem einen oder anderen der Ansprüche 9 und 10, umfassend eine polymerisierbare Zusammensetzung nach einem der Ansprüche 5 bis 8.

12. Verwendung eines Aldehyds als einziges Initiatorsystem, das geeignet ist, in Gegenwart des Sauerstoffs der Luft und unter der Wirkung einer gegebenen Strahlung ein Hydroperoxid zu bilden, um in Gegenwart der Luft und unter der Strahlung eine Zusammensetzung auf der Basis wenigstens eines Monomers, das wenigstens eine Kohlenstoff-Kohlenstoff-Doppelbindung umfaßt, zu polymerisieren.
